# FASCICULE DE BREVET EUROPEEN

(11) **EP 2 014 799 B1**
(45) Date de publication et mention de la délivrance du brevet: **08.12.2010**
(21) Numéro de dépôt: 07112288.1
(22) Date de dépôt: 11.07.2007
(51) Int. Cl.: C25B 1/12, C25B 15/08

(54) **Installation d'électrolyse à haute pression et procédé d'inertisation d'une telle installation**
Hochdruckelektrolyseanlage und Verfahren zur Inertisierung einer solchen Anlage
High-pressure electrolysis installation and inertisation method for such an installation

(43) Date de publication de la demande: 14.01.2009
(73) Titulaire: Swiss Hydrogen Power SHP SA, 1701 Fribourg (CH)
(72) Inventeur: Duret, Alexis, 1007, Lausanne (CH)
(74) Mandataire: Ravenel, Thierry Gérard Louis

(56) Documents cités:
- DE-A1- 3 837 354
- US-A1- 2003 029 734
- US-A1- 2005 072 688
- US-B2- 6 685 821

## Description

Une installation d'électrolyse à haute pression pour la décomposition de l'eau en hydrogène et en oxygène est connue. Une telle installation comprend un empilement d'électrolyse constitué d'une pluralité de cellules électrolytiques comportant chacune une anode et une cathode. L'installation comprend encore un système de recirculation d'eau fournissant de l'eau aux dites anodes et cathodes. Le système de recirculation comporte lui-même un circuit de recirculation de l'eau, une pompe de recirculation, un premier séparateur pour séparer l'eau et l'hydrogène gazeux produit dans l'empilement d'électrolyse et un second séparateur pour séparer l'eau et l'oxygène produit dans l'empilement d'électrolyse, ladite installation comprend encore des moyens d'alimentation hydrauliques prévus pour alimenter le circuit de recirculation en eau désionisée de manière à compenser l'eau consommée par la production d'hydrogène et d'oxygène gazeux, et comprend enfin des moyens d'extinction pour inertiser le premier et le second séparateurs lors de l'arrêt de l'installation.

La présente invention concerne un procédé d'inertisation d'une installation du type décrit ci-dessus lors de son arrêt.

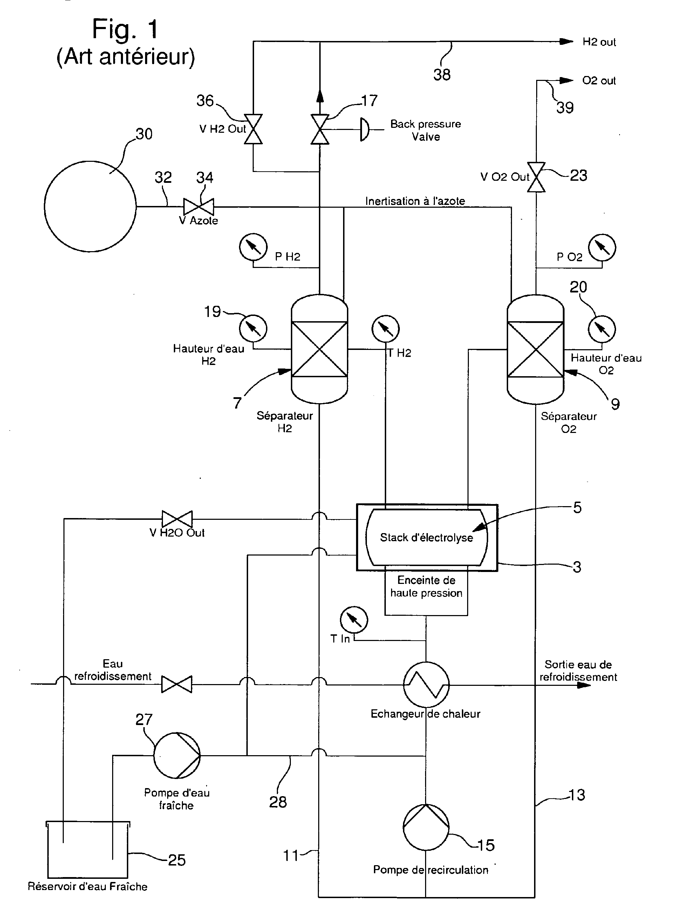

On connaît déjà des installations d'électrolyse conformes au préambule ci-dessus. Une telle installation de l'art antérieur est représentée schématiquement sur la figure 1 annexée. On reconnaît sur le schéma une enceinte pressurisée 3 renfermant un empilement d'électrolyse 5, un premier séparateur 7 et un second séparateur 9. On notera à ce propos que dans certaines variantes de réalisation de ces installations, l'enceinte pressurisée peut être omise. Un double circuit de recirculation 11, 13 est prévu pour alimenter l'empilement d'électrolyse en électrolyte (en l'occurrence de l'eau contenant en solution une substance adéquate connue de l'homme du métier comme par exemple de l'hydroxyde de potassium). Le circuit de recirculation 11, 13 est double. Il est formé d'un circuit cathodique 11 passant par les cathodes de l'empilement d'électrolyse, ainsi que d'un circuit anodique 13 passant par les anodes. Les deux circuits 11 et 13 possèdent une portion commune passant par une pompe de recirculation 15. La fonction de la pompe 15 est de faire circuler l'électrolyte en boucle dans le double circuit de recirculation 11, 13. En sortant de l'empilement 5, une partie de la solution électrolytique s'élève dans le circuit cathodique 11 jusqu'au premier séparateur 7, alors que le reste de la solution s'élève dans le circuit anodique jusqu'au deuxième séparateur 9. Le liquide s'élevant depuis les cathodes jusqu'au premier séparateur 7 est chargé d'hydrogène gazeux. De même, le liquide qui s'élève depuis les anodes est chargé d'oxygène gazeux. La séparation entre liquide et gaz se déroule dans les séparateurs 3, 5. Le liquide dégazéifié retourne ensuite à la pompe de recirculation 15.

L'hydrogène et l'oxygène s'accumulent respectivement dans les parties supérieures des deux séparateurs. Le premier séparateur 7 est muni d'une soupape de régulation de pression 17 qui détermine la pression de travail de l'ensemble de l'installation (habituellement entre 5 et 30 bars). Lorsque la pression à l'intérieur du séparateur 7 atteint la valeur limite de la soupape 17, celle-ci laisse s'échapper l'hydrogène produit. Comme, durant ce temps, l'oxygène continue de s'accumuler dans le second séparateur 9, le niveau d'eau à l'intérieur de ce dernier descend et, conformément au principe des vases communicants, le niveau d'eau à l'intérieur du premier séparateur 7 monte. Les deux séparateurs sont chacun équipés d'une jauge de niveau (respectivement référencées 19 et 20). Le second séparateur 9 est encore équipé d'une vanne de dépressurisation 23 et, lorsque les jauges indiquent que la différence de niveau entre les séparateurs dépasse une valeur prédéfinie, la vanne 23 s'ouvre et laisse s'échapper de l'oxygène jusqu'à égalisation des deux niveaux.

Le fonctionnement de l'installation d'électrolyse entraîne une destruction progressive de l'eau qu'elle contient. Lorsque la somme des niveaux d'eau dans les deux séparateurs descend au-dessous d'une valeur prédéterminée, des moyens d'alimentation hydrauliques sont enclenchés pour fournir de l'eau fraîche au circuit de recirculation 11, 13. Comme cela est représenté sur la figure 1, les moyens d'alimentation hydrauliques comprennent un réservoir d'eau désionisée 25 et un conduit 28 qui relie le réservoir au circuit de recirculation. Une pompe d'alimentation 27 est encore prévue pour faire passer l'eau fraîche dans le circuit de recirculation.

L'installation d'électrolyse est encore équipée de moyens d'extinction pour inertiser le premier et le second séparateur lors de l'arrêt de l'installation. Les moyens d'extinction comprennent une réserve d'azote sous pression 30 et un conduit d'amenée 32 reliant la réserve d'azote aux deux séparateurs 7, 9. Lorsqu'on désire arrêter l'installation, on ouvre une vanne 34 de manière à faire s'écouler l'azote dans les séparateurs, de préférence, avec un débit élevé. Simultanément, on ouvre une vanne de dépressurisation 36 sur le premier séparateur 7 ainsi que la vanne de dépressurisation 23 sur le second séparateur 9. Ainsi, l'azote ressort du premier séparateur par la vanne 36 en entraînant l'hydrogène contenu dans le séparateur 7. De même, l'azote peut s'échapper par la vanne 23 en entraînant l'oxygène contenu dans le séparateur 9. Cette manière de procéder permet de purger les deux séparateurs et ainsi notamment d'éviter tout risque d'explosion lié à la présence d'hydrogène.

Les installations d'électrolyse du type de celles qui viennent d'être décrites présentent certains inconvénients. Tout d'abord, les moyens d'extinction nécessitent de disposer d'une grande quantité d'azote sous pression. D'autre part, lors de l'inertisation, l'hydrogène contenu dans le premier séparateur 7 est perdu puisqu'il est mélangé à une grande quantité d'azote et ensuite relâché dans l'atmosphère.

La demande de brevet DE 3837354A1 décrit un procédé de sécurisation d'une installation d'électrolyte de l'eau à haute pression, comprenant une étape de rinçage de la cellule d'électrolyse à l'aide d'eau sous pression. Le brevet US 6,685,821 B2 mentionne la purge de l'hydrogène avec de l'eau lors des périodes d'arrêt d'une installation d'électrolyse de l'eau à haute pression.

La présente invention vise notamment à remédier aux défauts ci-dessus. Elle atteint ce but en fournissant une installation d'électrolyse dont les moyens d'extinction comprennent une première et une seconde vannes de dépressurisation équipant respectivement le premier et le second séparateurs, lesdites vannes de dépressurisation étant prévues pour dépressuriser simultanément les deux séparateurs tout en gardant sensiblement constant le niveau de l'eau à l'intérieur des deux séparateurs, et en ce que les moyens d'extinction sont prévus pour commander lesdits moyens d'alimentation hydrauliques pour remplir entièrement les deux séparateurs avec de l'eau une fois que les deux séparateurs ont été pratiquement dépressurisés.

On comprendra que selon la présente invention, on utilise les moyens d'alimentation hydrauliques de l'installation pour fournir le fluide inertisant pour les séparateurs. Grâce à cette caractéristique, il n'est pas nécessaire de prévoir une réserve d'azote sous pression, ce qui réduit considérablement le coût de revient de l'installation d'électrolyse.

D'autre part, les moyens d'alimentation hydrauliques sont les mêmes qui, en régime de fonctionnement normal, sont prévus pour réapprovisionner en eau fraîche le circuit de recirculation 11. Le fait d'utiliser les mêmes équipements durant la phase d'extinction et durant les phases de fonctionnement normal permet de simplifier considérablement la conception de l'installation.

L'hydrogène chassé du premier séparateur durant la phase d'inertisation, lorsque les deux séparateurs 7, 9 sont entièrement remplis avec de l'eau, peut ne pas être relâché dans l'atmosphère mais récupéré. En effet, l'hydrogène n'étant pas mélangé à de l'azote, sa qualité n'est pas altérée par le processus d'inertisation et il peut ainsi être récupéré.

Les moyens d'extinction sont également prévus pour interrompre l'alimentation en électricité de l'empilement d'électrolyse avant l'ouverture desdites vannes de dépressurisation. Les moyens d'extinctions sont prévus pour faire commencer à remplir les deux séparateurs par les moyens d'alimentation hydrauliques lorsque la pression d'hydrogène dans le premier séparateur est descendue au dessous de deux bars.
Les moyens d'extinctions peuvent commander commandent les moyens de d'alimentation hydrauliques de manière automatique. Les deux vannes de dépressurisation peuvent également avantageusement être commandées automatiquement. La première vanne de dépressurisation peut relâcher l'hydrogène dans l'atmosphère.

L'invention concerne un procédé selon la revendication 1 d'inertisation d'une installation d'électrolyse à haute pression pour la décomposition de l'eau en hydrogène et en oxygène lors de l'arrêt de l'installation, ladite installation comprenant un empilement d'électrolyse et constitué d'une pluralité de cellules électrolytiques comportant chacune une anode et une cathode, un système de recirculation d'eau fournissant de l'eau auxdites anodes et cathodes, le système de recirculation comportant un circuit de recirculation de l'eau, une pompe de recirculation, un premier séparateur pour séparer de l'eau l'hydrogène gazeux produit dans l'empilement d'électrolyse et un second séparateur pour séparer de l'eau l'oxygène produit dans l'empilement d'électrolyse, ladite installation comprenant encore des moyens d'alimentation hydrauliques prévus pour alimenter le circuit de recirculation en eau désionisée de manière à compenser l'eau consommée par la production d'hydrogène et d'oxygène gazeux, et comprenant enfin des moyens d'extinction pour inertiser le premier et le second séparateurs lors de l'arrêt de l'installation et dans laquelle les moyens d'extinction comprennent une première et une seconde vannes de dépressurisation équipant respectivement le premier et le second séparateurs, le procédé étant caractérisé en ce qu'il comprend entre autres les étapes de :
- dépressuriser simultanément les deux séparateurs tout en gardant sensiblement constant le niveau de l'eau à l'intérieur des deux séparateurs, et
- commander lesdits moyens d'alimentation hydrauliques pour remplir entièrement les deux séparateurs avec de l'eau une fois que les deux séparateurs ont été pratiquement dépressurisés.

Selon le procédé selon la revendication 1, l'alimentation en électricité de l'empilement d'électrolyse est interrompue avant l'ouverture desdites vannes de dépressurisation, et le remplissage des deux séparateurs par les moyens d'alimentation hydrauliques se produit lorsque la pression d'hydrogène dans le premier séparateur est descendue au dessous de deux bars.

De préférence, les moyens d'alimentation hydrauliques et les deux vannes de dépressurisation sont commandés de manière automatique et la première vanne de dépressurisation (36) relâche l'hydrogène dans l'atmosphère.

D'autres caractéristiques et avantages de la présente invention apparaîtront à la lecture de la description qui va suivre, donnée uniquement à titre d'exemple non limitatif, et faite en référence aux dessins annexés dans lesquels :
- la figure 1 est une représentation schématique d'une installation d'électrolyse de l'art antérieur;
- la figure 2 est une représentation schématique d'une installation d'électrolyse selon un mode de réalisation particulier de la présente invention.

En supprimant simplement sur le schéma de la figure 1, la réserve d'azote 30, le conduit d'amenée 32 et la vanne 34, on obtient la représentation schématique d'une installation d'électrolyse simplifiée.

En dehors de la phase d'extinction, le principe de fonctionnement de l'installation d'électrolyse représentée à la figure 1 est tout à fait semblable au principe de fonctionnement de l'installation de l'art antérieur décrite plus haut. La seule différence concerne la phase d'extinction et les moyens qui sont associés à cette phase. En effet, selon le présent exemple, lorsque l'extinction de l'installation est déclenchée, soit automatiquement, soit par un opérateur, les vannes de dépressurisation 36 et 23 s'ouvrent de manière contrôlée de façon à dépressuriser simultanément les deux séparateurs, tout en gardant sensiblement constant le niveau de l'eau à l'intérieur de ceux-ci. L'hydrogène et l'oxygène libérés par les vannes 36 et 23 quittent respectivement l'installation par les conduits d'évacuation 38 et 39 pour être récupérés. Les conduits d'évacuation 38 et 39 peuvent être les mêmes que ceux utilisés pour emporter les gaz produits durant le fonctionnement normal de l'installation. Lors de la dépressurisation des séparateurs, le contrôle du niveau de l'eau dans chaque séparateur est assuré par les jauges 19 et 20.

Dès que la pression dans les séparateurs 7, 9 a baissé au dessous d'environ deux bars, les moyens d'alimentation hydrauliques se mettent automatiquement en marche et fournissent de l'eau au circuit de recirculation pour faire s'élever le niveau de liquide dans les deux séparateurs jusqu'à les remplir complètement et ainsi à expulser tout l'hydrogène et tout l'oxygène contenus dans les séparateurs. Une fois cette opération accomplie, la pompe d'alimentation 27 et la pompe de recirculation 15 sont stoppées et toutes les vannes sont fermées.

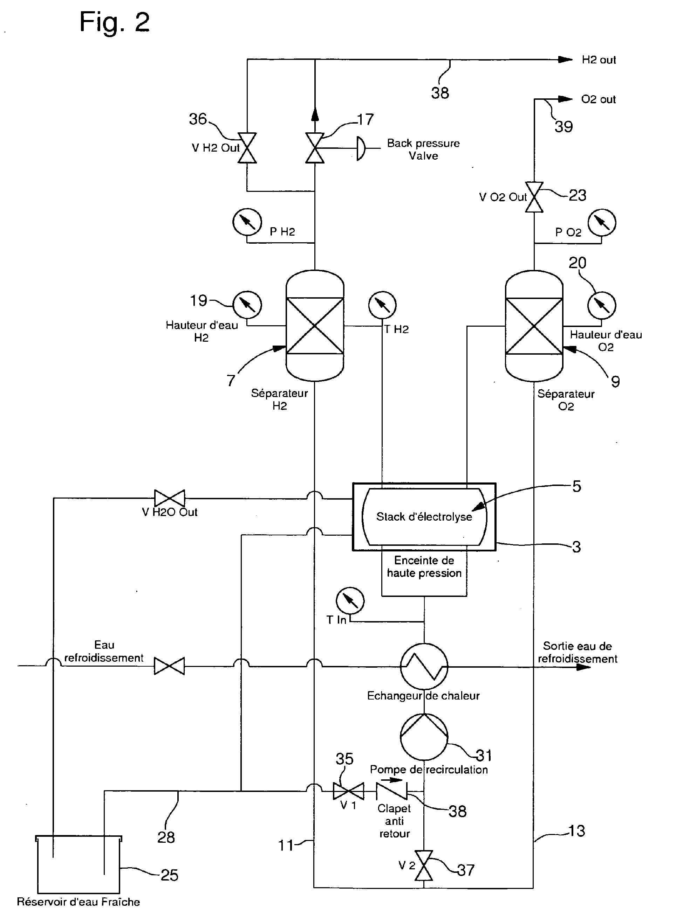

La figure 2 est une représentation schématique d'une installation d'électrolyse selon un deuxième mode de réalisation. Sur la figure 2, on a donnés aux éléments déjà décrits en relation avec la figure 1 les mêmes références numériques.

L'installation d'électrolyse illustrée par le schéma de la figure 2 diffère essentiellement de celle illustrée à la figure 1 en ce qu'une seule et même pompe 31 remplit les fonctions de pompe de recirculation et de pompe d'alimentation.

Pour ce faire, la pompe 31 est placée en aval de la jonction du conduit 28 avec le circuit de recirculation 13. On voit sur le schéma qu'une vanne d'alimentation 35 est montée sur le conduit 28 à l'emplacement où se trouvait la pompe d'alimentation 27 dans le premier mode de réalisation. De plus une seconde vanne 37 et un clapet anti-retour 38 sont montés sur le circuit de recirculation en amont de la jonction de celui-ci avec le conduit 28. On notera que le clapet anti-retour peut être omis. On comprendra qu'en commandant l'ouverture relative des vannes 35 et 37, on peut commander l'importance relative de l'alimentation en eau fraîche par rapport à la recirculation d'électrolyte sans avoir besoin de disposer de deux pompes. Le principal avantage de la variante qui fait l'objet du présent exemple est donc de permettre de faire l'économie d'une des deux pompes ce qui simplifie l'installation limite les risques de pannes de l'installation et la rend moins coûteuse.

On comprendra en outre que diverses modifications et/ou améliorations évidentes pour un homme du métier peuvent être apportées au mode de réalisation qui fait l'objet de la présente description sans sortir du cadre de la présente invention définie par les revendications annexées. En particulier, l'objet de la présente invention ne se limite pas à l'arrêt d'installations d'électrolyse qui associent la caractéristique d'utiliser les moyens d'alimentation hydrauliques pour l'inertisation avec la caractéristique d'avoir une seule et même pompe 31 remplissant tout à la fois les fonctions de pompe de recirculation et de pompe d'alimentation. Une installation d'électrolyse arrêtée selon le procédé de la présente invention ne doit comporter que l'une ou l'autre de ces deux caractéristiques.

## Revendications

1. Procédé d'inertisation d'une installation d'électrolyse à haute pression pour la décomposition de l'eau en hydrogène et en oxygène lors de l'arrêt de l'installation, ladite installation comprenant un empilement d'électrolyse (5) constitué d'une pluralité de cellules électrolytiques comportant chacune une anode et une cathode, un système de recirculation d'eau fournissant de l'eau auxdites anodes et cathodes, le système de recirculation comportant un circuit de recirculation de l'eau (11, 13), une pompe de recirculation (15), un premier séparateur (7) pour séparer de l'eau l'hydrogène gazeux produit dans l'empilement d'électrolyse (5) et un second séparateur (9) pour séparer de l'eau l'oxygène produit dans l'empilement d'électrolyse (5), ladite installation comprenant encore des moyens d'alimentation hydrauliques prévus pour alimenter le circuit de recirculation (11, 13) en eau désionisée de manière à compenser l'eau consommée par la production d'hydrogène et d'oxygène gazeux, et comprenant enfin des moyens d'extinction pour inertiser le premier et le second séparateurs (7, 9) lors de l'arrêt de l'installation et dans laquelle les moyens d'extinction comprennent une première et une seconde vannes de dépressurisation (36, 23) équipant respectivement le premier et le second séparateurs (7, 9), le procédé étant **caractérisé en ce qu'**il comprend les étapes consistant successivement à :
- interrompre l'alimentation en électricité de l'empilement d'électrolyse (5),
- ouvrir lesdites vannes de dépressurisation (36, 23) de manière à dépressuriser simultanément les deux séparateurs tout en gardant sensiblement constant le niveau de l'eau à l'intérieur des deux séparateurs, et
- commander lesdits moyens d'alimentation hydrauliques pour remplir entièrement les deux séparateurs (7, 9) avec de l'eau une fois que la pression d'hydrogène dans le premier séparateur (7) est descendue au dessous de deux bars.

2. Procédé selon la revendication 1, dans lequel les moyens d'alimentation hydrauliques sont commandés de manière automatique.

3. Procédé selon la revendication 1 ou 2, dans lequel les deux vannes de dépressurisation (36, 23) sont commandées automatiquement.

4. Procédé selon l'une des revendications 1 à 3 dans lequel la première vanne de dépressurisation (36) relâche l'hydrogène dans l'atmosphère.

## Claims

1. Method for inertising a high-pressure electrolysis installation for decomposing water into hydrogen and oxygen when the installation is shut down, said installation comprising an electrolysis stack (5) consisting of a plurality of electrolytic cells, each comprising an anode and a cathode, a water recirculation system supplying water to said anodes and cathodes, the recirculation system comprising a water recirculation circuit (11, 13), a recirculation pump (15), a first separator (7) for separating from the water the gaseous hydrogen produced in the electrolysis stack (5) and a second separator (9) for separating from the water the oxygen produced in the electrolysis stack (5), said installation further comprising hydraulic supply means for supplying the recirculation circuit (11, 13) with deionised water so as to compensate for the water consumed by the production of gaseous hydrogen and oxygen, and lastly comprising extinguishing means for inertising the first and second separators (7, 9) when the installation is shut down, and in which the extinguishing means comprise a first and a second pressure relief valve (36, 23) provided on the first and second separators (7, 9) respectively, the process being **characterised in that** it comprises the steps of:
- interrupting the electrical supply of the electrolysis stack (5);
- opening said first and a second pressure relief valves (36, 23) in such a way as to relieve the pressure in the two separators simultaneously, while keeping the water level inside the two separators substantially constant, and
- controlling said hydraulic supply means so as to completely fill the two separators (7, 9) with water once the pressure of the hydrogen in the first separator (7) has fallen below two bars.

2. Method according to claim 1, wherein the hydraulic supply means are controlled automatically.

3. Method according to claim 1 or 2, wherein the two pressure relief valves (36, 23) are controlled automatically.

4. Method according to any one of claims 1 to 3, wherein the first pressure relief valve (36) releases hydrogen into the atmosphere.

## Patentansprüche

1. Verfahren zum Inertisieren einer Hochdruck-Elektrolyseanlage für die Zerlegung von Wasser in Wasserstoff und Sauerstoff bei Anlagenstillstand, wobei die Anlage umfasst: einen Elektrolysestapel (5), der aus mehreren Elektrolytzellen gebildet ist, die jeweils eine Anode und eine Katode besitzen, ein Wasserumwälzsystem, das Wasser zu den Anoden und Katoden liefert, wobei das Umwälz-system einen Wasserumwälzkreis (11, 13), eine Umwälzpumpe (15), einen ersten Separator (7), um gasförmigen Wasserstoff, der in dem Elektrolysestapel (5) erzeugt wird, von Wasser zu trennen, und einen zweiten Separator (9), um Sauerstoff, der in dem Elektrolysestapel (5) erzeugt wird, von Wasser zu trennen, umfasst, wobei die Anlage außerdem Hydraulikversorgungsmittel umfasst, die vorgesehen sind, um den Umwälzkreis (11, 13) mit deionisiertem Wasser zu versorgen, derart, dass das durch die Erzeugung von gasförmigem Wasserstoff und von gasförmigem Sauerstoff verbrauchte Wasser ausgeglichen wird, und schließlich Extinktionsmittel, um den ersten und den zweiten Separator (7, 9) bei Anlagenstillstand zu inertisieren, wobei die Extinktionsmittel ein erstes und ein zweites Druckentlastungsventil (36, 23) enthalten, mit denen der erste bzw. der zweite Separator (7, 9) ausgerüstet sind, wobei das Verfahren **dadurch gekennzeichnet ist, dass** es die Schritte umfasst, die nacheinander darin bestehen:
- die Stromversorgung des Elektrolysestapels (5) zu unterbrechen,
- die Druckentlastungsventile (36, 23) zu öffnen, um gleichzeitig den Druck in den zwei Separatoren zu entlasten und um dabei den Wasserpegel in den zwei Separatoren im Wesentlichen konstant zu halten, und
- die Hydraulikversorgungsmittel zu steuern, um die zwei Separatoren (7, 9) vollständig mit Wasser zu befüllen, sobald der Wasserstoffdruck im ersten Separator (7) unter zwei Bar gefallen ist.

2. Verfahren nach Anspruch 1, wobei die Hydraulikversorgungsmittel automatisch gesteuert werden.

3. Verfahren nach Anspruch 1 oder 2, wobei die zwei Druckentlastungsventile (36, 23) automatisch gesteuert werden.

4. Verfahren nach einem der Ansprüche 1 bis 3, wobei das erste Druckentlastungsventil (36) Wasserstoff in die Atmosphäre entlässt.
